# EUROPEAN PATENT APPLICATION

(11) **EP 1 656 832 A1**
(43) Date of publication of application: **17.05.2006**
(21) Application number: 04772703.7
(22) Date of filing: 17.08.2004
(51) Int. Cl.: A01N 53/08, D06M 13/228

(54) **BEHAVIOR DISTURBANCE INDUCING AGENT FOR HARMFUL INSECT, FUNCTIONAL FIBER, FUNCTIONAL FABRIC AND FUNCTIONAL TEXTILE PRODUCT**

(30) Priority: 21.08.2003 JP 2003297479; 25.03.2004 JP 2004088934
(71) Applicant: Earth Chemical Co., Ltd., Tokyo 101-0048 (JP); Teijin Nestex Limited, Ko-141, Oohama-machi Nomi-shi Ishikawa 929-0122 (JP); Teijin Fibers Limited, Osaka-shi Osaka 541-8587 (JP)
(72) Inventor: NITTA, Isamu, Ako-shi, Hyogo 678-0255 (JP); MASUDA, Kiyomi, Teijin Nestex Limited, Ishikawa 929-0122 (JP)
(74) Representative: Grünecker, Kinkeldey, Stockmair & Schwanhäusser Anwaltssozietät
(86) International application number: PCT/JP2004/012754
(87) International publication number: WO 2005/018329

(57) **Abstract**

The invention is an insect pest behavioral disturbance inducer which comprises an organic ester compound having a vapor pressure of 10⁻³ Pa (25°C) order or less as an active ingredient, a functional fiber and a functional fabric, which hold aforementioned insect pest behavioral disturbance inducer, and a functional fiber product comprising the aforementioned functional fiber or a functional fabric, which can add excellent insect pest behavioral disturbance inducing effect to the applying place for a prolonged period of time.

## Description

### <Technical Field>

This invention relates to an insect pest behavioral disturbance inducer which induces behavioral disturbance by acting upon cranial nerves of insect pests, more illustratively, it relates to an insect pest behavioral disturbance inducer having the effect to prevent the biting behavior by the behavioral disturbance inducing action. Also, the invention relates to a functional fiber and a functional fabric, which hold the aforementioned insect pest behavioral disturbance inducer, and a functional fiber product consisting of the aforementioned functional fiber or a functional fabric.

### <Background of the Invention>

Recently, outdoor life is in vogue due to the boom to return to nature, and a countermeasure for insect pests has been drawing attention accompanied thereby. In addition, since the intention for agricultural chemical-free agricultural products is high, and working period in the agricultural land, including weeding work, became long, a countermeasure for insect pests has also been drawing attention in the field of agriculture.

The present applicant has also found that a polyurethane fiber is excellent in the retaining property and sustained release of an insect repellent and proposed an insect repellent processed fiber product in which the insect repellent was held in the polyurethane fiber (cf. JP-A-8-296171).

### <Disclosure of the Invention>

Since it is considered that the outdoor boom and the intention for agricultural chemical-free agricultural products continue in the future, it is predicted that more effective insect pest countermeasure and further prolonged period of time for holding the effect are required accompanied thereby. In addition, recently there is a danger of being infected with west Nile virus having a possibility of causing death via a mosquito, so that insect pest countermeasure has been regarded important more and more.

Based on such backgrounds, the invention contemplates providing an insect pest behavioral disturbance inducer which can add excellent insect pest behavioral disturbance inducing action to the place to be applied for a prolonged period of time, and a functional fiber, a functional fabric and a functional fiber product, that can hold the excellent insect pest behavioral disturbance inducing action for a prolonged period of time.

With the aim of attaining the aforementioned obj ects, the invention provides the following insect pest behavioral disturbance inducer, functional fiber, a functional fabric and functional fiber product.
(1) An insect pest behavioral disturbance inducer, which comprises an organic ester compound having a vapor pressure of 10⁻³ Pa (25°C) order or less as an active ingredient which induces behavior disturbing action of insect pests.
(2) The insect pest behavioral disturbance inducer described in the aforementioned (1), which comprises a nonionic surfactant.
(3) A functional fiber, which holds the insect pest behavioral disturbance inducer described in the aforementioned (1) or (2).
(4) The functional fiber described in the aforementioned (3), wherein the insect pest behavioral disturbance inducer is held by a resin binder.
(5) The functional fiber described in the aforementioned (4), wherein the resin binder comprises an acrylic copolymer having active hydroxyl group and a crosslinking agent having carbodiimide group.
(6) A functional fabric, which holds the insect pest behavioral disturbance inducer described in the aforementioned (1) or (2) .
(7) The functional fabric described in the aforementioned (6), wherein the insect pest behavioral disturbance inducer is held by a resin binder.
(8) The functional fabric described in the aforementioned (7), wherein the resin binder comprises an acrylic copolymer having active hydroxyl group and a crosslinking agent having carbodiimide group.
(9) A functional fiber product, which comprises the functional fiber described in the aforementioned (3) to (5) or the functional fabric described in the aforementioned (6) to (8).

In this connection, the fabric described in the aforementioned (3) includes cloths and non-woven fabric.

### <Best Mode for Carrying Out the Invention>

The following describes the invention in detail.

### (Insect pest behavioral disturbance inducer)

The insect pest behavioral disturbance inducer of the invention induces behavioral disturbance of insect pests by acting upon their cranial nerves and comprises an organic ester compound having a vapor pressure of 10⁻³ Pa (25°C) order or less as the active ingredient thereof. As the organic ester compound (cyclopropane carboxylic acid ester or the like) having such a vapor pressure, N-(3,4,5,6-tetrahydrophthalimido)methyl (1R)-cis/trans-chrysanthemate, 5-benzyl-3-furylmethyl-cis/trans-chrysanthemate, 3-phenoxylbenzyl (1R)-cis/trans-chrysanthemate, 3-phenoxylbenzyl (1RS)-cis/trans-3-2,2dichlorovinyl-2,2-dimethylcyclopropanecarboxylate, (RS)-α-cyano-3-phenoxybenzyl (1R)-cis/trans-chrysanthemate, (S)-2-methyl-4-oxo-3-(2-propynyl)-2-cyclopentenyl (1R)-cis/trans-chrysanthemate and the like and isomers thereof can be exemplified. In addition, these organic ester compounds may be used alone or as an optional combination.

Also, containing amount of the organic ester compound is from 0.1 to 20% by weight, more preferably from 0.5 to 10% by weight, based on the total amount of the insect pest behavioral disturbance inducer. The behavioral disturbance action cannot be expressed sufficiently when the containing amount is less than 0.1% by weight, and the insecticidal effect becomes the main when it exceeds 20% by weight, so that these cases are not desirable.

By the way, it is general that the insect pest behavioral disturbance inducer of the invention is held in fibers as its using embodiment. As the holding method in fibers, a method in which fibers are soaked in a solution containing the organic ester compound and then dried is convenient and effective. Regarding the solution for soaking, aqueous solution is desirable in view of the cost, but since the organic ester compound is oil-soluble, a surfactant is added to water together with the organic ester compound dissolved in a solvent to make an emulsion, and fibers are soaked in this emulsion. The solvent is not particularly limited with the proviso that it can dissolve the organic ester compound, but a glycerol fatty acid ester, sorbitan fatty acid ester or the like polyhydric alcohol fatty acid ester is suitable.

Alternatively, fibers may be treated with a liquid prepared by dissolving in ethanol, propanol, isopropanol or the like solvent, subsequently removing the solvent. This treatment is optional, such as soaking, spraying or the like.

In the aforementioned holding treatment, an acryl system, urethane system, polyurethane system, polyester system or the like binder resin may be used. Particularly, it is desirable to use a binder comprising an acrylic copolymer having active hydroxyl group and a crosslinking agent having carbodiimide group, because a coat filmwhich is excellent in durability is formed and the washing resistance therefore is markedly improved.

In addition, the surfactant is not particularly limited with the proviso that it does not hinder the practice, but a nonionic surfactant is desirable, and its examples include polyoxyethylene castor oil ether, polyoxyethylene hydrogenated castor oil ether, polyoxyethylene sorbitan ether, polyoxyethylene alkyl ether, polyoxyethylene octyl ether, polyoxyethylene lauryl ether, polyoxyethylene cetyl ether and the like. These nonionic surfactants may be used alone or as an optional combination. Containing amount of the nonionic surfactant is from 1 to 50% by weight, more preferably from 5 to 20% by weight, based on the total amount of the insect pest behavioral disturbance inducer. The emulsifying action becomes insufficient when the containing amount is less than 1 % by weight, and the liquid becomes viscous when it exceeds 50% by weight, so that these cases are not desirable.

Various additive agents conventionally added to drugs can be added to the insect pest behavioral disturbance inducer of the invention. For example, an ultraviolet ray absorbing agent may be added for the purpose of preventing deterioration by sunlight when applied to a fiber product. The ultraviolet ray absorbing agent has no limitation with the proviso that it does not hinder the practice, and a conventionally known substance can be optionally selected.

The insect pest behavioral disturbance inducer of the invention is particularly effective upon a mosquito, a gnat, a horsefly, a flea, a house tick, a stable fly, a bedbug and the like, and their biting behavior can be prevented by the insect pest behavioral disturbance inducing effect.

### (Functional fiber, a functional fabric)

The invention also relates to a functional fiber and a functional fabric, which are allowed to hold the aforementioned insect pest behavioral disturbance inducer. The fiber has no limitation, and for example, polyurethane, nylon, polyester, cellulose and the like various fibers can be cited.

Regarding the amount of the insect pest behavioral disturbance inducer to be held by a fiber, an amount of from 10 to 100 mg per 1 g fiber is suitable for giving sufficient behavioral disturbance inducing action. Control of the holding amount can be carried out by adjusting dilution ratio of the aforementioned soaking treating liquid of the insect pest behavioral disturbance inducer containing an organic ester compound.

### (Functional fiber product)

The invention further relates to a functional fiber product comprising the aforementioned functional fiber or a functional fabric. Kinds of the fiber product have no limitation, and it is applicable to general fiber products which are used in the room and also outdoors. As an example, a parka, a tent, a sleeping bag and the like outdoor articles, a shirt, a plain summer *kimono,* pants, a skirt, a jacket, workingclothes, apairof socks, an arm cover, a pet ware and the like clothes, a mosquito net and the like can be cited.

### <Examples>

The following illustratively describes the invention based on examples, but the invention is not limited to these examples.

### (Preparation of insect pest behavioral disturbance inducer)

An insect pest behavioral disturbance inducer was prepared by the following formulation.
- 3-Phenoxylbenzyl (1R)-cis/trans-chrysanthemate 5.0% by weight
- Polyhydric alcohol fatty acid ester 5.0% by weight
- Polyoxyethylene castor oil ether 5.3% by weight
- Polyoxyethylene alkyl ether 2.2% by weight
- Purified water balance for 100% by weight (Behavioral disturbance test)

A polyester fiber was impregnated with 3 g/m² of the aforementioned insect pest behavioral disturbance inducer, and an arm cover was prepared using this impregnation treated polyester system fiber. Thereafter, an arm equipped with this arm cover was inserted into a cage in which 25 individuals of stegomyia mosquito had been released, and the number of stegomyia mosquito came flying to the arm cover was counted every one minute to calculate its ratio (fly-coming ratio). Also, the number of biting stegomyia mosquito was counted after a lapse of 10 minutes to calculate its ratio (biting ratio).

In addition, for the sake of comparison, an arm cover was prepared using the same polyester system fiber which was not treated with the insect pest behavioral disturbance inducer, and the same test was carried out.

Based on the results shown in Table 1, in the case of the arm cover not treated with the insect pest behavioral disturbance inducer, there was a tendency in that the number of fly-coming stegomyia mosquito increases with the lapse of time, and 3/4 or more of the total are biting. Contrary to this, in the case of the arm cover treated with the insect pest behavioral disturbance inducer, the number of fly-coming stegomyia mosquito was less, and bitten and gnawed stegomyia mosquito was also zero. This is a result in that stegomyia mosquito induced behavioral disturbance by the insect pest behavioral disturbance inducer and its original biting behavior was thereby prevented. In addition, since the fly-coming ratio is sharply decreased, an effect to decease the fly-coming number can also be expected.

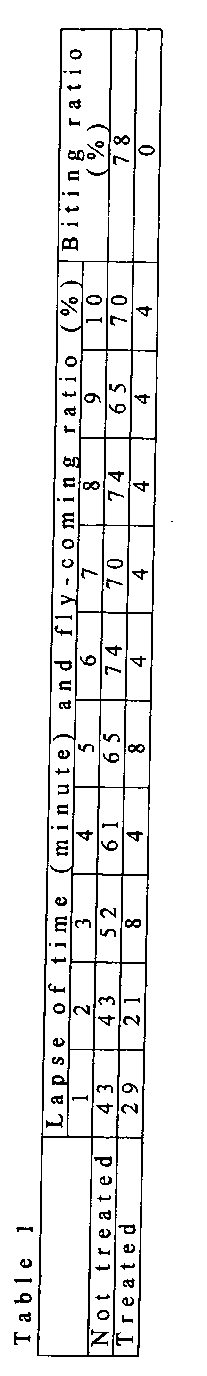

In addition, in order to evaluate washing durability in the case of a fiber or a fabric, the following test was carried out.

A cloth of polyester gabardine (METSUKE 200 g/m²) was soaked in the following solutions of A to C, and then adjusted to a squeezing ratio of 80% using a mangle, dried at 120°C and further heat treated at 150°C to effect crosslinking reaction, thereby preparing samples. Thereafter, persistency of the effect was examined by carrying out the aforementioned behavioral disturbance test before washing, after 10 times of washing, after 20 times of washing and after 50 times of washing.

### (Solution A)

- The insect pest behavioral disturbance inducer prepared in the above 7% by weight
- Acryl binder 5% by weight
- Water 88% by weight

### (Solution B)

- The insect pest behavioral disturbance inducer prepared in the above 7% by weight
- Hydroxyl group-containing acryl binder 5% by weight
- Water 88% by weight

### (Solution C)

- The insect pest behavioral disturbance inducer prepared in the above 7% by weight
- Hydroxyl group-containing acryl binder 5%byweight
- Carbodiimide group-containing crosslinking agent 0.5% by weight
- Water 87.5% by weight

Based on the results shown in Table 2, it was confirmed that the holding ability to fiber is increased by the use of a binder comprising the hydroxyl group-containing acryl binder and the carbodiimide group-containing crosslinking agent.

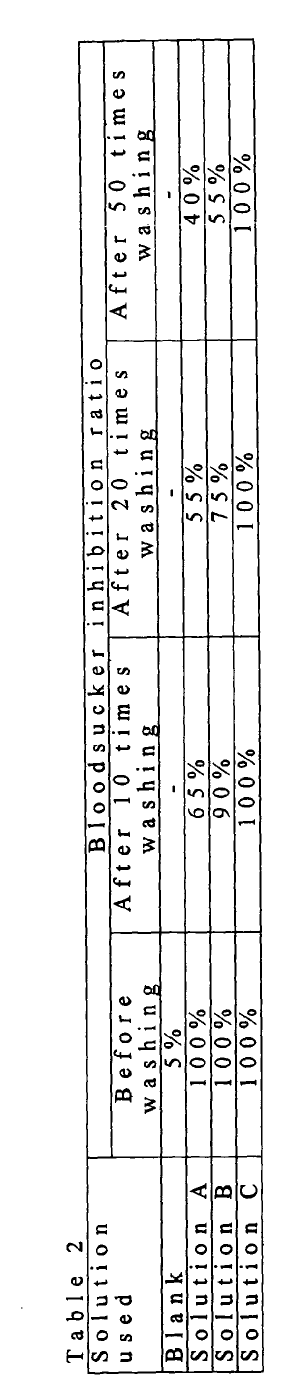

While the invention has been describe in detail and with reference to specific embodiments thereof, it will be apparent to one skilled in the art that various changes and modifications can be made therein without departing from the spirit and scope of the invention.

### <Industrial Applicability>

Since the insect pest behavioral disturbance inducer of the invention comprises a low volatility organic ester compound having a vapor pressure of 10⁻³ Pa (25°C) order or less as the active ingredient, excellent insect pest behavioral disturbance inducing effect can be added to the applying place for a prolonged period of time. In addition, the functional fiber, a functional fabric and insect repellent processed fiber product, in which this insect pest behavioral disturbance inducer was held, can maintain excellent insect pest behavioral disturbance inducing effect for a prolonged period of time.

## Claims

1. An insect pest behavioral disturbance inducer, which comprises an organic ester compound having a vapor pressure of 10⁻³ Pa (25°C) order or less as an active ingredient which induces behavior disturbing action of insect pests.

2. The insect pest behavioral disturbance inducer as described in claim 1, which comprises a nonionic surfactant.

3. A functional fiber, which holds the insect pest behavioral disturbance inducer described in claim 1 or 2.

4. The functional fiber as described in claim 3, wherein the insect pest behavioral disturbance inducer is held by a resin binder.

5. The functional fiber as described in claim 4, wherein the resin binder comprises an acrylic copolymer having active hydroxyl group and a crosslinking agent having carbodiimide group.

6. A functional fabric, which holds the insect pest behavioral disturbance inducer described in claim 1 or 2.

7. The functional fabric as described in claim 6, wherein the insect pest behavioral disturbance inducer is held by a resin binder.

8. The functional fabric as described in claim 7, wherein the resin binder comprises an acrylic copolymer having active hydroxyl group and a crosslinking agent having carbodiimide group.

9. A functional fiber product, which comprises the functional fiber as described in claims 3 to 5 or the functional fabric as described in claims 6 to 8.
